# EUROPÄISCHE PATENTANMELDUNG

(11) **EP 3 490 080 A1**
(43) Veröffentlichungstag der Anmeldung: **29.05.2019**
(21) Anmeldenummer: 17204042.0
(22) Anmeldetag: 28.11.2017
(51) Int. Cl.: H01R 24/22, H02G 3/08, H01R 13/74, H01R 25/00

(54) **STECKDOSENMODUL**

(71) Anmelder: OBO Bettermann Hungary Kft., 2347 Bugyi (HU)
(72) Erfinder: Küsters, Frank, 51643 Gummersbach (DE); Warkus, Kai, 51709 Marienheide (DE)
(74) Vertreter: Köchling, Conrad-Joachim

(57) **Zusammenfassung**

Die Erfindung betrifft ein Steckdosenmodul (1) zum Einbau in einen Montageträger (2), bestehend aus einem quaderförmigen Grundkörper (3) mit frontseitigem Steckeraufnahmeteil (4) und hinterseitig eingebauten elektrischen Kontakten (5-7), wobei die Kontakte (5-7) mit einem Anschlusskabel (9) innerhalb des Grundkörpers (3) kontaktgebend verbunden sind, das Anschlusskabel (9) innerhalb des Grundkörpers (3) zugentlastet ist und dieser komplette Anschlussbereich von einer Kappe (15) abgedeckt ist, die den Grundkörper (3) zur Quaderform ergänzt, und wobei das Anschlusskabel (9) aus der Kappe (15), vorzugsweise an einer Seite der Kappe (15) abgeführt ist und endseitig einer freien Kabellänge einen Anschlussstecker (17) aufweist.

## Beschreibung

Im Stand der Technik ist es bekannt, Montageträger zur Aufnahme von Mehrfachsteckdosen zur Verfügung zu stellen, die vorzugsweise als Unterflurinstallationssystem eingebaut werden. Bisher sind Zweifach- und Dreifachsteckdosen bekannt, die zu einer Einheit zusammengefasst sind und durchgeschleift, also miteinander elektrisch verbunden sind.

Solche Mehrfachsteckdosen werden als Bausatz in einen Montageträger eingesetzt, der eine entsprechende Einbauöffnung für Zweifachmodule, für Dreifachmodule oder auch für Vierfachmodule aufweist, wobei bei Vierfachmodulen dann zwei Zweifachsteckdosen in Reihe zueinander angeordnet und eingebaut werden.

Um dem Anwender eine einfache Möglichkeit der Installation zu bieten, die keine elektrischen Kenntnisse voraussetzt, sind diese Mehrfachsteckdosen mit Adaptersteckern ausgerüstet, die an einem Ende des Steckdosensatzes eingesteckt werden. In diese kann dann ein entsprechender Stecker mit Anschlusskabel eingesteckt werden. Die Adapter sind an der Seite und an der Unterseite des jeweiligen Mehrfachsteckdosensatzes angeordnet und erstrecken sich samt zugehörigem Stecker etwa auf die Länge von 2 Steckdosen. Eine solche Anordnung ist nicht in einfacher Weise auf eine Einfachsteckdose übertragbar, weil bei einer Einfachsteckdose der Raum für einen Adapterstecker und den entsprechenden Anschlussstecker unterhalb der Steckdose nicht zur Verfügung steht. Diese Verbindungsanordnung würde über die Abmessungen der Steckdose hinausragen. Dies führt dazu, dass eine solche Ausgestaltung nicht brauchbar ist und bisher nicht zur Verfügung gestellt wird.

Aus diesem Grunde funktioniert insbesondere der Einbau von zwei Stromkreisen in einen Montageträger, der Mehrfachsteckdosen aufweist, nur dann, wenn zwei Zweifachsteckdosen eingesetzt werden, also ein großer Montageträger vorgesehen ist, der vier Steckdosen aufnehmen kann. Bei miteinander durchgeschleiften Zweifachsteckdosen und Dreifachsteckdosen ist in kleineren Montageträgern, die für eine Zweifachsteckdose bestimmt sind oder für eine Dreifachsteckdose bestimmt sind, kein Platz für entsprechende Installationen, sodass diese nicht dazu genutzt werden können, zwei unterschiedliche Stromkreise zu installieren.

Es besteht aber ein Bedarf dahin, auch bei kleineren Steckdoseneinheiten unterschiedliche Stromkreise realisieren zu können.

Um dies realisieren zu können, schlägt die Erfindung ein Steckdosenmodul zum Einbau in einen Montageträger, bestehend aus einem quaderförmigen Grundkörper mit frontseitigem Steckeraufnahmeteil und hinterseitig eingebauten elektrischen Kontakten, wobei die Kontakte mit einem Anschlusskabel innerhalb des Grundkörpers kontaktgebend verbunden sind, das Anschlusskabel innerhalb des Grundkörpers zugentlastet ist und dieser komplette Anschlussbereich von einer Kappe abgedeckt ist, die den Grundkörper zur Quaderform ergänzt, und wobei das Anschlusskabel aus der Kappe, vorzugsweise an einer Seite der Kappe abgeführt ist und endseitig einer freien Kabellänge einen Anschlussstecker aufweist, vor.
Ein solches Steckdosenmodul stellt quasi eine Einfachsteckdose dar, die in sich autark ist und aufgrund ihrer Ausgestaltung vom Anwender nicht separat verdrahtet werden muss, sondern das Steckdosennmodul ist schon mit einem integriertem Anschlusskabel und Anschlussstecker konfektioniert, sodass der Anwender auch ohne elektrotechnische Kenntnisse ein solches Steckdosenmodul richtig einsetzen kann. Das Anschlusskabel ist in das Steckdosenmodul geführt und in diesem zugentlastet. Eine gewisse Kabellänge ragt aus dem Steckdosenmodul ab und weist endseitig einen Anschlussstecker auf, sodass eine einfache Installation ermöglicht ist.

Durch Anwendung eines solchen Steckdosenmoduls in einer vorgesehenen Installation in einem Montageträger, der beispielsweise für eine Dreifachsteckdose oder für zwei Zweifachsteckdosen bestimmt ist, kann der gewünschte Effekt leicht erreicht werden. Bei einer Dreifachsteckdose wird dann ein üblicher Satz von Zweifachsteckdosen eingebaut und zusätzlich das singuläre Steckdosenmodul. Bei einer Anordnung eines Montageträgers, der für zwei Zweifachsteckdosen geeignet und bestimmt ist, kann der Einbau einer Dreifachsteckdose erfolgen und zusätzlich ein singuläres Steckdosenmodul eingebracht werden. Hierbei können auf engstem Raum die entsprechenden Bestückungen vorgenommen werden, wobei auch zwei unterschiedliche Stromkreise installiert werden können, in dem das Steckdosenmodul einen Stromkreis und die Mehrfachsteckdose einen zweiten Stromkreis kontaktiert.

Auch die Kombination eines normalen Stromkreises und eines Kreises für Datentechnik beziehungsweise Multimediatechnik ist möglich, da hierfür zwei unterschiedliche Bauteile zur Verfügung stehen, nämlich das singuläre Steckdosenmodul und die Mehrfachsteckdose.

Die jeweilige Bestückung kann vor Ort, also am Montageplatz vorgenommen werden, ohne dass eine elektrische Fachkraft dazu benötigt wird. Alle Elemente sind durch Steckverbindungen verbunden. Durch die entsprechende Ausgestaltung des singulären Steckdosenmoduls ist es möglich, dieses trotz der beengten Platzverhältnisse in der gewünschten Installationsart und -weise anzuordnen und zu installieren.

Das Anschlusskabel des singulären Steckdosenmoduls ist vorzugsweise seitlich aus der Kappe abgeführt, da unterseitig der Kappe ein Einbauraum oder ein Verlegeraum für das Kabel nicht zur Verfügung steht.

Bevorzugt ist dabei vorgesehen, dass an gegenüberliegenden Seitenflächen des Grundkörpers Haltemittel, Rastmittel oder Befestigungsmittel vorgesehen sind.

Mittels dieser Haltemittel oder dergleichen ist es möglich, das Steckdosenmodul in einen Montageträger einzusetzen und in diesen zu fixieren, ohne dass es besonderer Hilfsmittel bedarf.

Bevorzugt ist zudem vorgesehen, dass die Kappe an einem Endbereich abgeschrägt oder gerundet ist.

Dadurch, dass die Kappe an einem Endbereich abgeschrägt oder gerundet oder eine geeignete Ausnehmung aufweist, ist die Montage erleichtert, wenn das singuläre Steckdosenmodulen die passende Einsatzöffnung des Montageträgers eingesetzt wird, da dann eine schräge Zuführung und ein Verschwenken möglich ist, ohne dass der Körper des Steckdosenmoduls bei der Montage hinderlich ist.

Zudem ist bevorzugt vorgesehen, dass der Grundkörper nahe seiner Frontseite einen quer vorragenden Montagerand aufweist.

Ein solcher Montagerand dient als Positionshilfe beim Einsetzen in einen Montageträger.

Eine besonders vorteilhafte Ausgestaltung wird noch darin gesehen, das die Kappe eine in Kabelverlegerichtung verlaufende Rinne oder einem zurückspringendem Absatz aufweist, vorzugsweise nahe eines oder an einem seitlichen Randbereich.

Durch die an der Kappe vorgesehene Rinne oder dergleichen wird ein Freiraum geschaffen, der es ermöglicht, die Kabel von benachbarten Steckdosensätzen an der Rückseite der singulären Steckdose vorbeizuführen, ohne dass der Einbauraum überschritten werden muss, der durch den Montageträger zur Verfügung gestellt ist.

Gegenstand der Erfindung ist ferner ein Montageträger zur Aufnahme einer Dreifachsteckdose oder zwei Zweifachsteckdosen, wobei die Mehrfachdosen in einem dazu passenden Rahmen einsetzbar und in einem passenden Installationsrahmen einfügbar sind, wobei die Zweifach- oder Dreifachsteckdosen elektrisch durchgeschleift miteinander verbunden sind und an einer Stirnseite ein Adapterstecker eingesteckt ist, der unterhalb der Dosen an deren Rückseite mit einem Anschlussstecker samt Kabel steckverbindbar ist.

Um hierbei die Installationsmöglichkeiten zu verbessern und insbesondere auch in einfacher Weise unterschiedliche Stromkreise anschließen zu können, ist vorgesehen, dass in einen Dreifach- Montageträger ein Zweifachsteckdosensatz und ein singuläres Steckdosenmodul gemäß einem der Ansprüche 1 bis 5 eingefügt ist oder in einen Vierfach-Montageträger ein Dreifachsteckdoseneinsatz und ein singuläres Steckdosenmodul gemäß einem der Ansprüche 1 bis 5 eingefügt ist.

Gemäß dieser Ausgestaltung ist in einen Dreifachmontageträger ein Zweifachsteckdosensatz und ein singuläres Steckdosenmodul eingesetzt. In einen Vierfach-Montageträger ist ein Dreifachsteckdosensatz und ein singuläres Steckdosenmodul eingesetzt. Beide Installationsweisen ermöglichen die Anordnung von 2 separaten Stromkreisen, die einerseits durch den Zweifachsteckdosensatz und das singuläre Steckdosenmodul gebildet sind und andererseits durch den Dreifachsteckdosensatz und das zusätzliche singuläre Steckdosenmodul.

Eine vorteilhafte Weiterbildung wird darin gesehen, dass die Bauhöhe des singulären Steckdosenmoduls im Wesentlichen gleich der Bauhöhe eines Zweifach- oder Dreifachsteckdosensatzes samt daran montiertem Adapterstecker und Anschlussstecker ist.

Durch diese Ausgestaltung ist sichergestellt, dass die Gesamtbauhöhe sowohl des Steckdosenmoduls als auch der Mehrfachsteckdosensätze etwa gleich ist und somit die maximale Einbautiefe gerade bei der Unterflurinstallation von allen Elementen eingehalten wird.

Bevorzugt ist zudem vorgesehen, dass der Montageträger mit seinen eingebauten Elementen zwei Stromkreise realisiert, nämlich einen ersten Stromkreis für den Zweifach- oder Dreifachsteckdosensatz und einen zweiten Stromkreis für das singuläre Steckdosenmodul.

Zudem ist bevorzugt vorgesehen, dass der Montageträger als Unterflurinstallationsteil ausgebildet ist und vorzugsweise durch einen Abdeckrahmen und eine Verschlussklappe komplettiert ist.

Auch kann vorgesehen sein, dass der Einbauplatz für die Mehrfachsteckdosen und das singuläre Steckdosenmodul durch einen am Montageträger befestigten Trennsteg voneinander getrennt ist.

Gerade beim Einbau in eine solche Anordnung ist die Ausgestaltung gemäß Anspruch 3 besonders vorteilhaft für die Handhabung und Montage.

Hierbei ist zudem bevorzugt, dass das singuläre Steckdosenmodul derart im Montageträger montiert ist, dass die oder eine Schräge oder Rundung der Kappe einem Rahmenschenkel des Montageträgers benachbart ist.

Auch dies erleichtert die richtige Zuführung und Montage des singulären Steckdosenmoduls.

Ausführungsbeispiele der Erfindung sind in den Zeichnungen dargestellt und im Folgenden näher beschrieben.

Es zeigt:
- Fig. 1: eine Explosionsdarstellung eines Steckdosenmoduls sowie eine Zweifachsteckdose nebst Montageträger;
- Fig. 2: einen Zusammenbau der Anordnung Gemäß Figur 1 von der Rückseite her gesehen;
- Fig. 3: desgleichen von der Vorderseite her gesehen;
- Fig. 4: den Zusammenbau im Zusammenhang mit Bestandteilen einer Unterflurinstallation von schräg vorn gesehen;
- Fig. 5: desgleichen von schräg hinten gesehen;
- Fig. 6: eine mögliche Montage der Teile in einem Montageträger in Ansicht;
- Fig. 7: desgleichen in Draufsicht;
- Fig. 8: desgleichen im Schnitt A-A der Figur 7 gesehen;
- Fig. 9: eine weitere Einbausimulierung in Ansicht,
- Fig. 10: desgleichen in Draufsicht gesehen;
- Fig. 11: desgleichen im Schnitt A-A der Figur 10 gesehen.

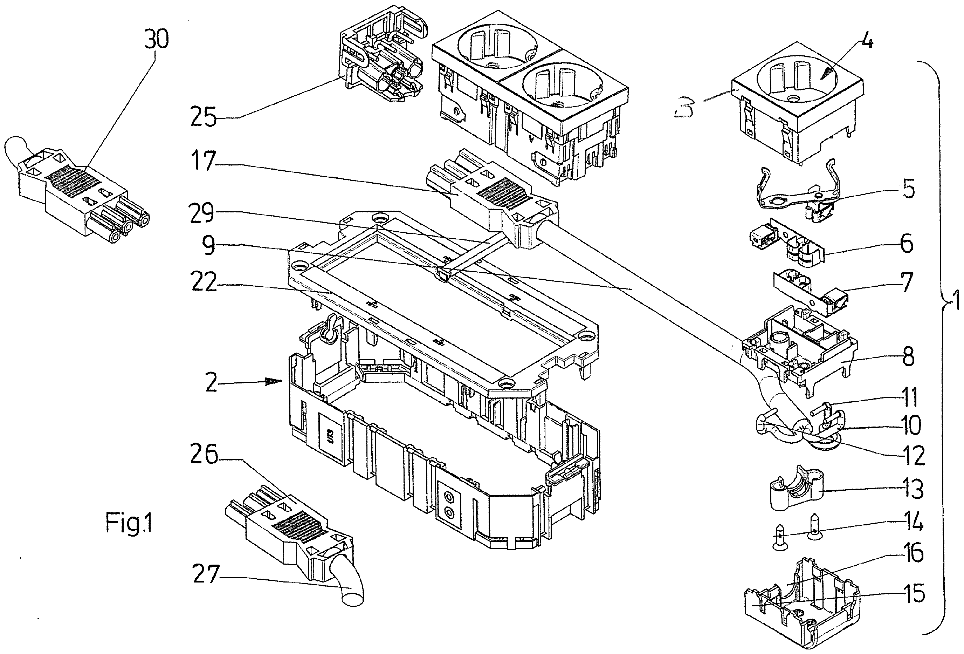

In der Zeichnung ist ein Steckdosenmodul 1 zum Einbau in einen Montageträger 2 gezeigt. Das Steckdosenmodul 1 ist in Figur 1 in Explosionsdarstellung gezeigt. Es handelt sich um ein singuläres Bauteil, welches zweckentsprechend in einem Montageträger eingebaut werden kann.

Es besteht aus einem quaderförmigen Grundkörper 3 mit frontseitigem Steckeraufnahmeteil 4 und hinterseitig eingebauten elektrischen Kontakten 5,6,7, wobei die Kontakte in einem Sockel 8 aufgenommen sind und mit einem Anschlusskabel 9, nämlich mit dessen abisolierten Adern 10,11,12 innerhalb des Grundkörpers kontaktierend verbunden sind. Das Anschlusskabel 9 ist innerhalb des Grundkörpers 3 zudem zugentlastet. Hierzu sind die Zugentlastungsmittel 13, 14 vorgesehen. Der komplette Anschlussbereich, der diese Elemente aufnimmt, ist von einer Kappe 15 abgedeckt, die den Grundkörper 3 zu einer annähernden Quaderform ergänzt. Im zusammengebauten Zustand ist das Anschlusskabel 9 aus der Kappe 15 im Bereich 16 an einer Seite der Kappe abgeführt, wobei endseitig einer freien Kabellänge ein Anschlussstecker 17 vorgesehen ist.

Die gegenüberliegenden Seitenflächen des Grundkörpers 3 weisen Haltemittel, Rastmittel oder sonstige Befestigungsmittel 18 auf, von denen in der Figur 1 nur die an der einen Seite befindlichen Elemente ersichtlich sind.

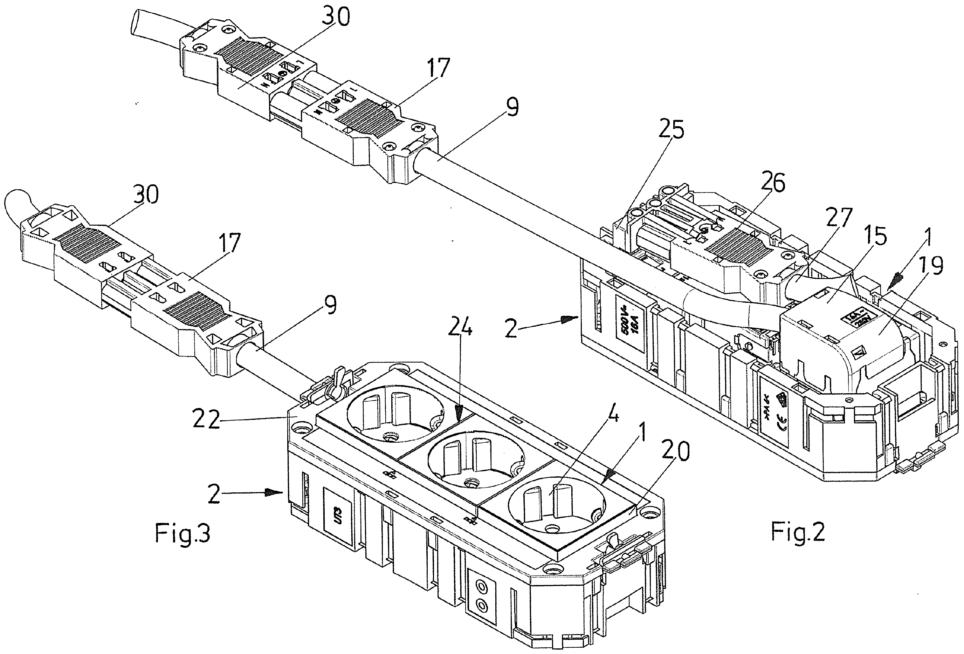

Wie insbesondere beispielsweise in Figur 2 ersichtlich, ist die Kappe 15 an einem Endbereich abgeschrägt oder gerundet. Dieser Bereich ist mit 19 bezeichnet. Der Grundkörper 3 weist nahe seiner Frontseite umlaufend einen quer vorragenden Montagerand 20 auf, der in der Montagesollposition als Einstecktiefenbegrenzung dient.

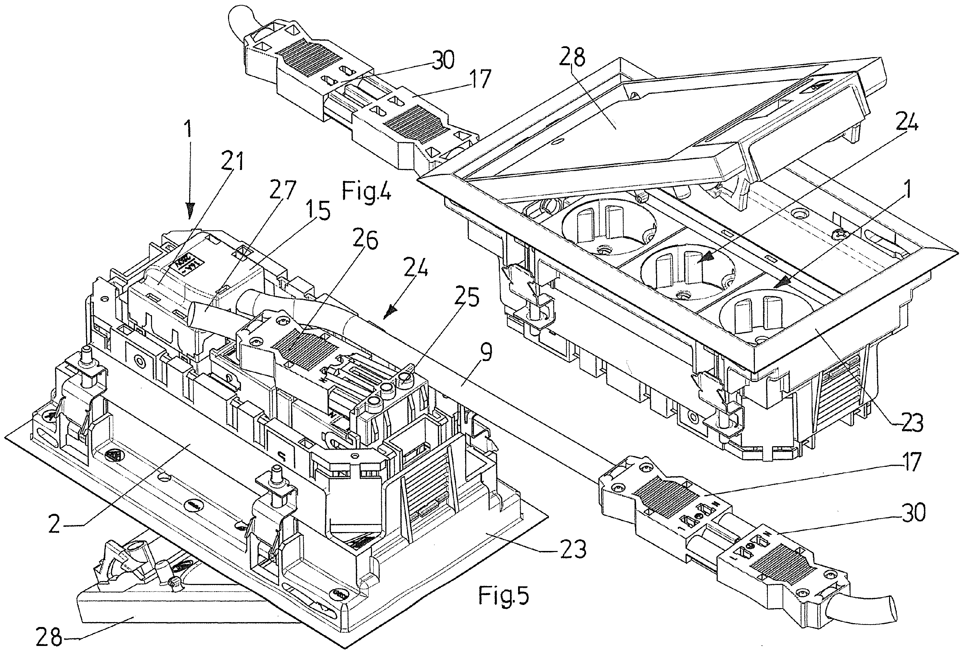

Wie insbesondere in Figur 5 ersichtlich, weist die Kappe 15 eine in Verlegerichtung von Kabeln verlaufende Rinne 21 auf. Diese Rinne kann gerundete Konturen haben. Sie kann aber auch als Absatz ausgebildet sein und ist vorzugsweise an einem seitlichen Randbereich der Kappe 15 angeordnet und ausgebildet.

Im Ausführungsbeispiel ist der Montageträger 2 in Längsrichtung so groß ausgebildet, dass er zur Aufnahme einer Dreifachsteckdose geeignet wäre. Dazu ist ein passender Rahmen 22 mit dem Montageträger 2 kombiniert, was insgesamt in einen passenden Installationsrahmen 23 einfügbar ist, wie er beispielsweise in Figur 4 gezeigt ist.

Im Ausführungsbeispiel ist die Anordnung so vorgenommen, dass in diese Rahmenkombination eine Zweifachsteckdose 24 eingesetzt werden kann, deren Kontakte elektrisch durchgeschleift miteinander verbunden sind, wobei an einer Stirnseite ein Adapterstecker 25 eingesteckt ist, der unterhalb der Dosen 24 an deren Rückseite mit einem Anschlussstecker 26 samt Kabel 27 steckverbindbar, bzw. steckverbunden ist. In der Montagesollposition, die beispielsweise in Figur 5 von hinten ersichtlich ist, übergreift diese Anordnung von Adapterstecker 25 und Anschlussstecker 26 nahezu die gesamte Länge der Doppelsteckdose 24 auf der Rückseite. Zusätzlich ist in den Rahmen 22 des Montageträgers 2 ein singuläres Steckdosenmodul 1 eingefügt bzw. einschiebbar, wie insbesondere in Figur 2 bis 10 ersichtlich ist. Dadurch, dass das singuläre Steckdosenmodul 1 nicht wie die anderen Komponenten mit einem Adapterstecker 25 und einem Anschlussstecker 26 kombiniert werden muss, sondern an dem singulären Steckdosenmodul 1 ein Kabel 9 unmittelbar angeschlagen ist, welches eine ausreichende Länge hat, damit dessen Stecker 17 für Anschlusszwecke in geeigneter Position zur Verfügung steht, ist es möglich, das singuläre Steckdosenmodul 1 neben der Zweifachdose 24 anzuordnen und entsprechende Verbindungselemente zur bestimmungsgemäßen Verbindung vorzusehen und anzuordnen, ohne dass sich die Verbindungselemente der Doppelsteckdose 24 und des singulären Steckdosenmoduls 1 bei der Verlegung stören.

Diese Anordnung ermöglicht es insbesondere, dass der Montageträger 2 mit den von ihm aufgenommenen Elementen zwei separate Stromkreise realisieren kann.

Von Bedeutung ist, dass die Bauhöhe des singulären Steckdosenmoduls 1 im Wesentlichen gleich der Bauhöhe eines Zweifachsteckdoseneinsatzes 24 samt daran montierten Adapterstecker 25 und Anschlussstecker 17 ist. Dies ist anschaulich in Figur 5 ersichtlich. Hierdurch wird sichergestellt, dass die Gesamtbauhöhe des Elementes eine bestimmte Abmessung nicht überschreitet. Dies ist insbesondere dann von Bedeutung, wenn solche Montageträger 2 als Unterflurinstallationsteile eingesetzt werden oder vorgesehen sind, wie dies beispielsweise in Figur 4 und 5 gezeigt ist. Hierbei ist ein zusätzlicher Abdeckrahmen 23 vorgesehen, der durch eine Verschlussklappe 28 komplettiert ist. Diese gesamte Einheit ist als Unterflurbauteil in Gebäudeböden oder dergleichen einbaubar. Hierbei ist die Gesamtbauhöhe des aus der singulären Steckdose 1 beziehungsweise der Mehrfachsteckdose 24 gebildeten Elementes von Bedeutung, weil die gesamte Bauhöhe möglichst einheitlich sein soll und nicht durch einzelne Bauteile überschritten werden soll.

Der Einbauplatz für die Mehrfachsteckdose 24 und das singuläre Steckdosenmodul 1 am Montageträger 22 ist durch einen am Montageträger 22 befestigten Trennsteg 29 abgegrenzt, wobei durch den Trennsteg 29 ein entsprechender Halt für die Einbauteile und eine Positionshilfe gebildet ist.

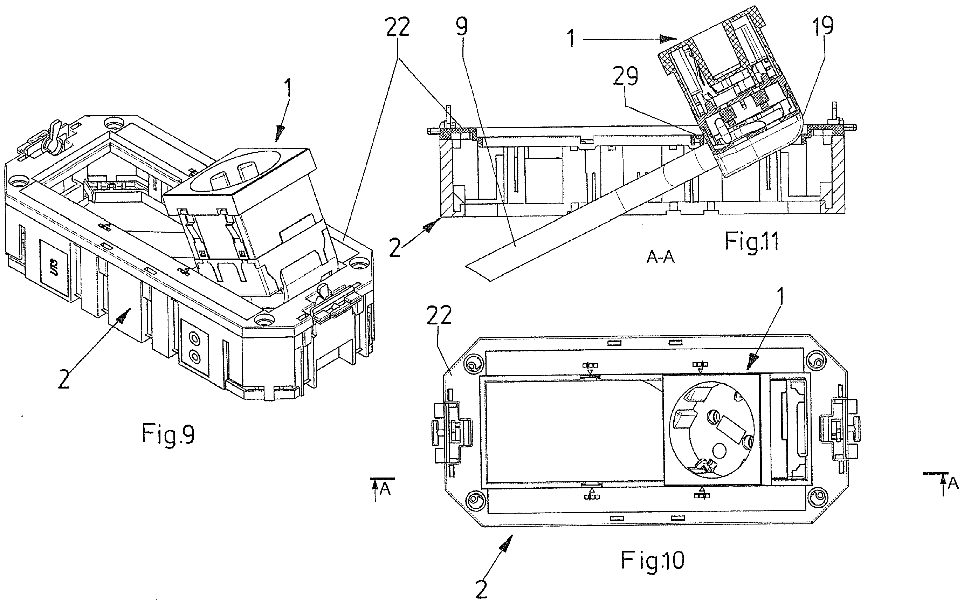

Insbesondere beim Einbau des singulären Steckdosenmoduls 2, wie dies in Figur 9 bis 11 verdeutlicht ist, ist die Rundung 19 der Kappe 15 von Bedeutung, um den Einbau zu erleichtern, weil durch die Rundung 19 bei der Positionierung der Teile wie in Figur 11 ersichtlich ist, ein einfaches Verschwenken des singulären Steckdosenmoduls 1 um die durch den Steg 29 gebildete Kante möglich ist, ohne dass eine Randkante der Kappe dabei hinderlich ist.

Ergänzend wird noch darauf hingewiesen, dass der Stecker 30 das Verbindungsmittel ist, welches mit dem Anschlussstecker 17 des singulären Steckdosenmoduls verbunden wird.

Während in Figur 1 die Bauteile jeweils in explosionsartiger Darstellung gezeigt sind, ist in Figur 2 und 3 die Situation im Zusammenbau der Teile gezeigt und zwar in Figur 2 von der Rückseite her gesehen und Figur 3 von der Vorderseite her gesehen.

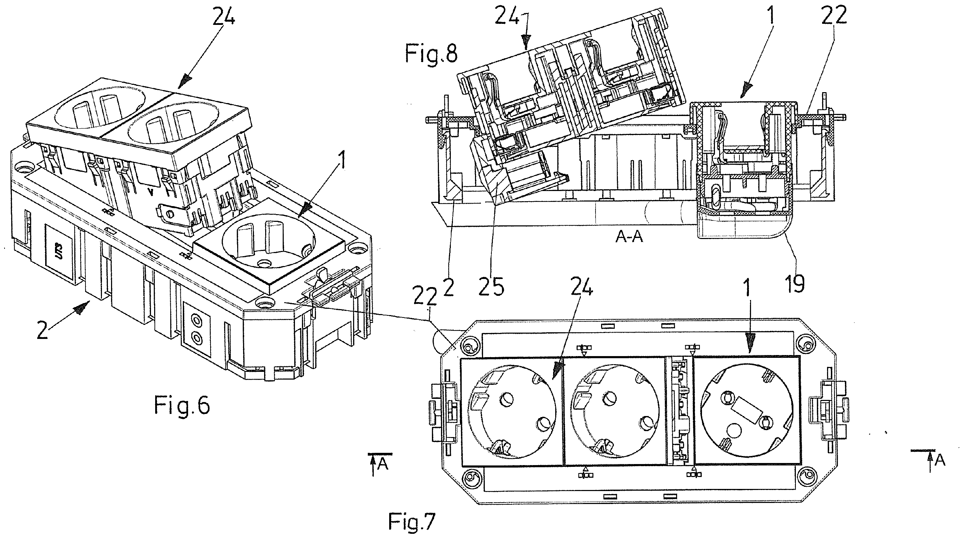

Figur 4 und 5 zeigt die Komplettierung mit den entsprechenden Rahmenteilen einer Unterflurinstallation. Die Figuren 6 bis 8 zeigen den Einbau der Zweifachsteckdosenkombination 24 in eine solche Einheit, in der schon ein singuläres Steckdosenmodul angeordnet ist.

In Figur 9 bis 11 ist eine Situation gezeigt, in der das singuläre Steckdosenmodul 1 eingebaut wird, wobei der Trennsteg 2 schon vorinstalliert ist.

Die Erfindung ist nicht auf das Ausführungsbeispiel beschränkt, sondern im Rahmen der Offenbarung vielfach variabel.

Alle neuen in der Beschreibung und/oder Zeichnung offenbarten Einzel- und Kombinationsmerkmale werden als erfindungswesentlich angesehen.

## Patentansprüche

1. Steckdosenmodul (1) zum Einbau in einen Montageträger (2), bestehend aus einem quaderförmigen Grundkörper (3) mit frontseitigem Steckeraufnahmeteil (4) und hinterseitig eingebauten elektrischen Kontakten (5-7), wobei die Kontakte (5-7) mit einem Anschlusskabel (9) innerhalb des Grundkörpers (3) kontaktgebend verbunden sind, das Anschlusskabel (9) innerhalb des Grundkörpers (3) zugentlastet ist und dieser komplette Anschlussbereich von einer Kappe (15) abgedeckt ist, die den Grundkörper (3) zur Quaderform ergänzt, und wobei das Anschlusskabel (9) aus der Kappe (15), vorzugsweise an einer Seite der Kappe (15) abgeführt ist und endseitig einer freien Kabellänge einen Anschlussstecker (17) aufweist.

2. Steckdosenmodul nach Anspruch (1), **dadurch gekennzeichnet, dass** an gegenüberliegenden Seitenflächen des Grundkörpers (3) Haltemittel, Rastmittel oder Befestigungsmittel (18) vorgesehen sind.

3. Steckdosenmodul nach Anspruch 1 oder 2, **dadurch gekennzeichnet, dass** die Kappe (15) an einem Endbereich abgeschrägt oder gerundet ist.

4. Steckdosenmodul nach einem der Ansprüche 1 bis 3, **dadurch gekennzeichnet, dass** der Grundkörper (3) nahe seiner Frontseite einen quer vorragenden Montagerand (20) aufweist.

5. Steckdosenmodul nach einem der Ansprüche 1 bis 4, **dadurch gekennzeichnet, dass** die Kappe (15) eine in Kabelverlegerichtung verlaufende Rinne (21) oder einem zurückspringendem Absatz aufweist, vorzugsweise nahe eines oder an einem seitlichen Randbereich.

6. Montageträger (2) zur Aufnahme von einer Dreifachsteckdose oder zwei Zweifachsteckdosen, wobei die Mehrfachdosen (24) in einen dazu passenden Rahmen (22) einsetzbar und in einem passenden Installationsrahmen (2) einführbar sind, wobei die Zweifach- oder Dreifachsteckdosen (24) elektrisch durchgeschleift miteinander verbunden sind und an einer Stirnseite ein Adapterstecker (25) eingesteckt ist, der unterhalb der Dosen an deren Rückseite mit einem Anschlussstecker (26) samt Kabel (27) steckverbindbar ist, **dadurch gekennzeichnet, dass** in einen Dreifach-Montageträger (2) ein Zweifachsteckdosensatz (24) und ein singuläres Steckdosenmodul (1) gemäß einem der Ansprüche 1 bis 5 eingefügt ist oder in einen Vierfach-Montageträger ein Dreifachsteckdoseneinsatz und ein singuläres Steckdosenmodul (1) gemäß einem der Ansprüche 1 bis 5 eingefügt ist.

7. Montageträger nach einem Anspruch 6, **dadurch gekennzeichnet, dass** die Bauhöhe des singulären Steckdosenmoduls (1) im Wesentlichen gleich der Bauhöhe eines Zweifach- oder Dreifachsteckdosensatzes (24) samt daran montiertem Adapterstecker (25) und Anschlussstecker (26) ist.

8. Montageträger nach Anspruch 6 oder 7, **dadurch gekennzeichnet, dass** der Montageträger (2) mit seinen eingebauten Elementen zwei Stromkreise realisiert, nämlich einen ersten Stromkreis für den Zweifach- oder Dreifachsteckdosensatz (24) und einen zweiten Stromkreis für das singuläre Steckdosenmodul (1).

9. Montageträger nach einem der Ansprüche 6 bis 8, **dadurch gekennzeichnet, dass** der Montageträger (2) als Unterflurinstallationsteil ausgebildet ist und vorzugsweise durch einen Abdeckrahmen (23) und eine Verschlussklappe (28) komplettiert ist.

10. Montageträger nach einem der Ansprüche 6 bis 9, **dadurch gekennzeichnet, dass** der Einbauplatz für die Mehrfachsteckdosen (24) und das singuläre Steckdosenmodul (1) durch einen am Montageträger befestigten Trennsteg (29) voneinander getrennt ist.

11. Montageträger nach einem der Ansprüche 6 bis 10, **dadurch gekennzeichnet, dass** das singuläre Steckdosenmodul (1) derart im Montageträger (2) montiert ist, dass die oder eine Schräge oder Rundung (19) der Kappe (15) einem Rahmenschenkel des Montageträgers (2,22) benachbart ist.
